# EUROPÄISCHE PATENTSCHRIFT

(11) **EP 3 852 933 B1**
(45) Veröffentlichungstag und Bekanntmachung des Hinweises auf die Patenterteilung: **11.10.2023**
(21) Anmeldenummer: 19752177.6
(22) Anmeldetag: 07.08.2019
(51) Int. Cl.: B04C 5/15, B04C 5/18, B04C 11/00, B01D 21/24, B01D 21/26, B01D 21/32, B04C 5/14, D21D 5/24

(54) **STEUERVERFAHREN EINER REINIGUNGSVORRICHTUNG MIT SCHWERTEIL-ABSCHEIDER**
CONTROL METHOD FOR A CLEANING DEVICE WITH A HEAVY-FRACTION SEPARATOR
PROCÉDÉ DE COMMANDE D'UN DISPOSITIF DE NETTOYAGE À SÉPARATEUR DE FRACTION LOURDE

(30) Priorität: 18.09.2018 DE 102018122808
(43) Veröffentlichungstag der Anmeldung: 28.07.2021
(73) Patentinhaber: Voith Patent GmbH, 89522 Heidenheim (DE)
(72) Erfinder: SCHUSTER, Sebastian, 88281 Schlier-Oberankenreute (DE); JASCHEK, Thomas, 88368 Bergatreute (DE); SCHNEIDER, Mathias, 89522 Heidenheim (DE)
(74) Vertreter: Voith Patent GmbH - Patentabteilung
(86) Internationale Anmeldenummer: PCT/EP2019/071214
(87) Internationale Veröffentlichungsnummer: WO 2020/057851

(56) Entgegenhaltungen:
- EP-A2- 0 138 475
- WO-A1-2006/067873
- WO-A1-2011/157590
- AT-A4- 506 940
- DE-A1- 3 211 865
- DE-U1-202005 003 105
- JP-B2- 4 968 743

## Beschreibung

Die Erfindung betrifft ein Steuerverfahren einer Vorrichtung zur Reinigung einer Suspension, welche zumindest eine Kammer für die Suspension sowie einen damit verbundenen Schwerteil-Abscheider besitzt.

Hydrozyklone sind gut geeignet, um durch Zentrifugalkräfte Schwerteile und Leichtteile in Suspensionen, insbesondere in Faserstoffsuspensionen zu konzentrieren und über den Auslauf bzw. den Abscheider abzuleiten.

Im Sedimentationstank erfolgt die Abtrennung der Schwerteile über Sedimentation unter Einfluss der Gewichtskraft.

In der Regel werden bei diesen Vorrichtungen über die Schwerteil-Abscheider kleine Metallteile, Glassplitter und Sand abgeführt.

Um Verschleiß vorzubeugen ist es bekannt, in die Kammer Verdünnungswasser zuzuführen oder das Schwerteil-Rejekt zu verdünnen und dabei Fasern in die Kammer zurück zu spülen.

Wird zu wenig Verdünnungswasser zugeführt, so besteht die Gefahr einer Verstopfung sowie eines hohen Verschleißes, bei zu viel Verdünnungswasser können Rejekte in die Kammer zurückgeleitet werden.

Aus der AT 506 940 A4 ist eine Vorrichtung zum Abscheiden von Feststoffteilchen aus einer Trübe mit einem von der Trübeflüssigkeit durchströmten Zyklonabscheider bekannt. Der Zyklonabscheider ist mit einem zylinderförmigen Aufgabebereich, dem eine tangential im Mantel des zylinderförmigen Aufgabebereichs mündende Aufgabeeinrichtung zugehört, mit einem sich zu einem unterlaufseitigen Austragsbereich für angereicherte Trübe hin konisch verjüngenden Mantelabschnitt und mit einem überlaufseitigen Ausströmbereich für die gereinigte Trübe ausgebildet. An den unterlaufseitigen Austragsbereich (4) ist für die angereicherte Trübe ein Ventil angeschlossen. Dem Ventil ist ein die Dichte der angereicherten Trübe messender Sensor vorgelagert ist. Als mögliche Sensoren ist ein Ultraschallsensor oder ein optischer Sensor vorgesehen, durch den das transmittierte oder reflektierte Licht mit einem Lichtdetektor erfasst wird.

Aus der DE102010027680B4 ist ein Verfahren zum Abtasten des Unterlaufstrahls eines Hydrozyklons, insbesondere zur Regelung desselben durch Erfassen der Strahlveränderung am Grobkornaustrag durch optische Mittel bekannt. Es erfolgt eine Abbildung des Strahles auf einer opto-elektronischen Bildaufnahmeeinrichtung, insbesondere einer Kamera, mittels einer Durchlicht-Beleuchtungseinrichtung. Hierdurch werden Veränderungen der optischen Transparenz des Strahls und/oder ein sich ändernder Strahlwinkel ermittelt.

Aus der WO 2006/067873 A1 ist eine Vorrichtung und ein Verfahren mit einem Sedimationstank bekannt.

Aus der JP2009189985A2 ist ein Hydrozyklon mit einer optischen Erfassung einer Verstopfung nach einem Rotationsventil in der Schwerteilabführung bekannt.

Aus der WO 2011/157590 A1 ist es bekannt eine Schwerteilabscheidug durch Messung der Transparenz optisch zu erfassen. Bei der Ausschleusung der Schwerteil-Rejekte ist die Taktzeit variabel. Zu kurze Taktzeiten bedeuten dabei höhere Faserverluste und Schieber-Verschleiß und zu lange Taktzeiten verschlechtern die Abscheideleistung.

Die Aufgabe der Erfindung ist es, die Schwerteilabscheidung zu optimieren.

Erfindungsgemäß wurde die Aufgabe dadurch gelöst, dass im Bereich des Schwerteil-Abscheiders der Grad der Turbulenz und/oder der Umfang der Störstofffracht und/oder die Schütthöhe optisch erfasst und bei der Steuerung der Vorrichtung berücksichtigt wird. Bei dieser optischen Erfassung wird die Lageveränderung einzelner Partikel über die Zeit bzw. bestimmte Zeitabstände auf der Basis von Bildern ausgewertet.

Mit diesen Messdaten lässt sich eine optimale Abscheidung selbst bei Druckschwankungen erreichen. Über die entsprechenden Stellglieder kann so die Beladung und die Entleerung des Schwerteil-Abscheiders geregelt werden.

Es wird dabei der Grad der Turbulenz über eine Auswertung der Geschwindigkeit einzelner Partikel in der Suspension und/oder der Umfang der Störstofffracht über eine Auswertung der Dichte der Partikel in der Suspension und/oder die Schütthöhe im Schwerteilabscheider über eine Auswertung des Verhältnisses zwischen der Anzahl an ruhenden und an sich bewegenden Partikeln erfasst.

Zur Vermeidung von Verstopfungen, zur Förderung einer Faserrückströmung in die Kammer sowie zur Beeinflussung von Strömungen in der Kammer zwecks Verschleißminderung ist es oft vorteilhaft, wenn im Bereich des Schwerteil-Abscheiders und/oder einem davor liegenden Abschnitt der Kammer Verdünnungsflüssigkeit in die Suspension geleitet wird. Dabei sollte die Menge der zugeführten Verdünnungsflüssigkeit in Abhängigkeit vom Grad der Turbulenz und/oder dem Umfang der Störfracht gesteuert werden.

Die aus der Suspension entfernten Stoffe oder Teile werden im Schwerteil-Abscheider gesammelt und können aus diesem geschlossenen System mittels Schwerteilschleuse herausgebracht werden.

Zur Realisierung einer Schwerteilschleuse besitzt der Schwerteil-Abscheider einen ersten und einen zweiten steuerbaren Schieber, zwischen denen sich ein Rejektraum befindet.

Solange der erste Schieber, der die Verbindung zwischen dem Rejektraum und der die Suspension führenden Kammer herstellt, geöffnet und der zweite geschlossen ist, füllt sich der Rejektraum kontinuierlich mit dem zu entfernenden Unrat.

Das eigentliche Ausschleusen erfolgt dadurch, dass der erste Schieber geschlossen und der zweite Schieber zur Rejektabführung hin geöffnet wird, wodurch der im Rejektraum befindliche Inhalt entleert werden kann. In der Regel fällt dieser in Folge seines Gewichtes aus dem Rejektraum heraus; er kann aber auch abgesaugt oder ausgespült werden. Dieses Ausschleusen erfolgt in der Regel automatisch mit einer Taktsteuerung.

Um den Faserverlust zu minimieren und die Abscheideleistung zu maximieren sollte die Steuerung der Schieber und damit auch die Taktzeit in Abhängigkeit vom Umfang der Störfracht und/oder der Schütthöhe in dem Rejektraum gesteuert werden. Darüber hinaus werden wegen der im Allgemeinen längeren Taktzeit auch die Schieber geschont.

Im Hinblick auf die optische Erfassung der Parameter im Schwerteil-Abscheider sollte auf wenigstens einer Seite des Rejektraumes zumindest eine Lichtquelle und wenigstens eine Kamera angeordnet sein.

Zur Schonung der Messmittel ist es hierbei von Vorteil, wenn die Wand des Rejektraums abschnittswese lichtdurchlässig ist und die Lichtquelle und/oder die Kamera außerhalb des Rejektraums angeordnet sind.

Um eine Beeinträchtigung der Kamera durch die Lichtquelle zu verhindern, sollten die Lichtquelle und die Kamera außerhalb des Rejektraums gegenüber dem lichtdurchlässigen Abschnitt der Wand des Rejektraums angeordnet sein und sich zwischen Lichtquelle und Kamera eine möglichst bis zur Wand des Rejektraums reichende Trennwand befinden.

Besonders vorteilhaft ist die Anwendung der Erfindung bei Hydrozyklonen. Diese weisen eine Kammer kreisförmigen Querschnitts auf, in die an einem Ende ein Einlauf sowie ein Leichtteil-Auslauf und am gegenüberliegenden Ende ein Schwerteil-Abscheider mündet.

Die Faserstoffsuspension wird im Allgemeinen durch tangentiales Einblasen über den Einlauf in der Kammer auf eine kreisförmige Bahn gebracht, wobei die Faserstoffsuspension auf Grund der Zentrifugalkraft an die Wand der Kammer gedrückt wird. Dabei bewegt sich die Faserstoffsuspension spiralförmig vom Einlauf in Richtung Schwerteil-Abscheider.

Hierbei sollte die Kammer zumindest abschnittsweise konisch ausgebildet sein, wobei sich der Durchmesser der Kammer zum Schwerteil-Abscheider hin verringert. Die Verminderung des Durchmessers führt zu einer Erhöhung der Rotationsgeschwindigkeit und damit zu einer Verstärkung der Zentrifugal- und Fliehkräfte. Dadurch werden die Schwerteile an die Wand der Kammer gedrückt und dort aufkonzentriert. Am Ende der Kammer können die Schwerteile dann über den Abscheider abgeführt werden.

Da sich in der Zentrumsachse der Kammer die Leichtteile aufkonzentrieren, sollte am einlaufseitigen Ende der Kammer ein vorzugsweise rohrförmiger, entlang der Zentrumsachse verlaufender Leichtteil-Auslauf in die Mitte der Kammer ragen. Über diesen Auslauf können so die Leichtteile der Suspension abgepumpt werden.

Um auch Faserstoffsuspensionen hoher Stoffdichte reinigen zu können ist es von Vorteil, wenn, beispielsweise wie in der EP 1 069 234 beschrieben, in die Kammer wenigstens eine Zuleitung für Verdünnungsflüssigkeit mündet.

Besondere Vorteile ergeben sich, wenn der Hydrozyklon zur Reinigung der Faserstoffsuspension von Schwerteilen eingesetzt wird und dabei die gereinigte Faserstoffsuspension über den Leichtteil-Auslauf abgeführt wird.

Ebenso ist die Erfindung bei einem Sedimentationstank mit einem Einlauf und einer vergleichbar aufgebauten Schwerteilschleuse einsetzbar.

Wegen des hohen Faseranteils ergeben sich besondere Vorteile bei der Behandlung von zur Herstellung einer Papier-, Karton-, Tissue- oder einer anderen Faserstoffbahn dienende Faserstoffsuspension, welche am Einlauf vorzugsweise eine Stoffdichte zwischen 0,5 und 6%, insbesondere zwischen 1,5 und 3,5 % hat.

Auch bei der Behandlung von, bei diesem Herstellungsprozess anfallender Faserstoffsuspension in Form von Abwasser ergeben sich Vorteile mit dieser Erfindung hinsichtlich Faserverlust.

Nachfolgend soll die Erfindung an zwei Ausführungsbeispielen näher erläutert werden. In der beigefügten Zeichnung zeigt:
Figur 1: einen schematischen Querschnitt durch einen Hydrozyklon,
Figur 2: durch einen Sedimentationstankt und
Figur 3: einen Längsschnitt durch eine Messanordnung mit Kamera 11 und Lichtquelle 10.

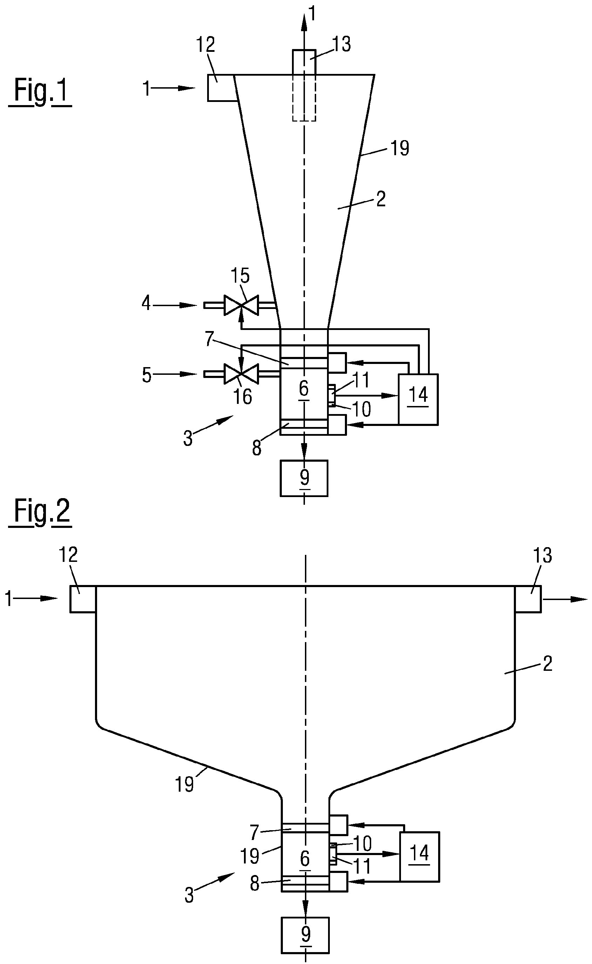

Die in Figur 1 dargestellte Vorrichtung in Form eines Hydrozyklons dient der Reinigung einer Faserstoff-Suspension 1 einer Stoffaufbereitungsanlage einer Papiermaschine mit einer Stoffdichte zwischen 1,5 und 3,5% von Schwerteilen.

Das feststehende Gehäuse des Hydrozyklons umschließt eine längliche Kammer 2 mit kreisförmigem Querschnitt.

An einem Ende der Kammer 2 befindet sich ein Einlauf 12, über den die zu reinigende Faserstoff-Suspension 1 tangential eingedüst wird. Hierdurch wird die Faserstoff-Suspension 1 auf eine kreisförmige Bahn gebracht, wobei die Suspension 1 gegen die Wand 19 der Kammer 2 gedrückt wird.

Durch die dabei wirkenden Zentrifugal- und Fliehkräfte reichern sich die Schwerteile an der Wand 19 der Kammer 2 und die Leichtteile in der Mitte der Kammer 2 an.

Auf diese Weise gelangen die Schwerteile an der Wand 19 der Kammer 2 spiralförmig zum gegenüberliegenden Ende der Kammer 2 mit dem Schwerteil-Abscheider 3, über den die Schwerteile aus dem Hydrozyklon zur Rejektabführung 9 geleitet werden.

Die in der Mitte der Kammer 2 vorhandene, von den Schwerteilen gereinigte Faserstoff-Suspension 1 wird als Leichtteil-Komponente über den Leichtteil-Auslauf 13 abgepumpt.

Hierzu reicht ein rohrförmiger Leichtteil-Auslauf 13 am einlaufseitigen Ende entlang der Zentrumsachse in die Mitte der Kammer 2.

An den Einlauf 12 schließt sich in Richtung Schwerteil-Abscheider 3 ein kegelförmiger Hydrozyklon-Abschnitt an, in dem sich der Durchmesser der Kammer 2 zum Abscheider 3 hin kontinuierlich vermindert.

Durch diese Verjüngung steigt die Rotationsgeschwindigkeit der Suspension 1 derart an, dass sich die Schwerteile an der Wand 19 der Kammer 2 aufkonzentrieren.

Im Unterschied hierzu zeigt Figur 2 einen Sedimentationstank zur Reinigung einer Suspension 1, welche von faserhaltigem Abwasser der Stoffaufbereitungsanlage der Papiermaschine gebildet wird.

Die Suspension 1 gelangt über einen Einlauf 12 in die Kammer 2 des Sedimentationstanks. Wegen des höheren Gewichts sinken die Schwerteile auf den Boden der Kammer 2 und sammeln sich dort in einer Senke des Bodens, welche zum Schwerteil-Abscheider 3 führt. Auch hier werden die Schwerteile vom Schwerteil-Abscheider 3 zur Rejektabführung 9 geleitet.

Das so gereinigte Fluid kann dann über den Leichteil-Auslauf 13 abgeführt werden.

In beiden Fällen besitzt der Schwerteil-Abscheiders 3 einen Rejektraum 6, der von zwei steuerbaren Schiebern 7,8 begrenzt wird. Während ein Schieber 7 zur Kammer 2 der Reinigungsvorrichtung weist, ist der andere Schieber 8 zur Rejektabführung 9 gerichtet.

Sollen Schwerteile in dem Rejektraum 6 gesammelt werden, so ist der Schieber 7 zur Kammer 2 offen und der Schieber 8 zur Rejektabführung 9 geschlossen. Hat sich genügend Rejekt im Rejektraum 6 angesammelt so wird dieser geleert, indem der Schieber 7 zur Kammer 2 geschlossen und anschließend der Schieber 8 zur Rejektabführung 9 geöffnet wird.

Die Ansteuerung dieser Schieber 7,8 zur Leerung des Abscheiders 3 erfolgt von einer Steuervorrichtung 14 in Abhängigkeit vom Umfang der Störfracht und/oder der Schütthöhe in dem Rejektraum 6.

Beim Hydroyzklon gemäß Figur 1 wird außerdem die Möglichkeit gezeigt, Verdünnungsflüssigkeit 5 über ein Ventil 16 in den Rejektraum 6 zu führen, was einer Verstopfung entgegenwirkt und den störungsfreien Einsatz des Hydrozyklons auch bei hohen Stoffdichten erlaubt.

Außerdem wird noch Verdünnungsflüssigkeit 4 über ein Ventil 15 in einen unmittelbar vor dem Schwerteil-Abscheider 3 liegenden Abschnitt der Kammer 2 in die Suspension 1 geleitet. Die Eindüsung dieser Verdünnungsflüssigkeit 4 kann tangential oder entgegen der Richtung der Rotationsströmung der Suspension 1 in der Kammer 2 erfolgen, wodurch die Rotationsströmung auch zur Vermeidung eines hohen Verschleißes beeinflusst werden kann.

Der Umfang der zugeführten Verdünnungsflüssigkeit 4,5 wird von der Steuervorrichtung 14 über eine entsprechende Ansteuerung der Ventile 15,16 geregelt. Dabei nutzt die Steuervorrichtung 14 Informationen zum Grad der Turbulenz und/oder zum Umfang der Störfracht im Rejektraum 6. Hierbei ist auch zu berücksichtigen, dass zu viel Verdünnungsflüssigkeit 4,5 Rejekt in die Kammer 2 zurückspülen kann, was die Abscheideleistung mindert.

Auch beim Sedimentationstank kann eine Verdünnung vor dem Schwerteil-Abscheider 3 oder in den Rejektraum 6 desselben erfolgen und in gleicher Weise wie beim Hydrozyklon gesteuert werden. Im Allgemeinen dient dies dann zur Vermeidung einer Verstopfung.

Unabhängig vom Einsatzfall werden die Parameter des Schwerteil-Abscheiders 3 bezüglich dem Grad der Turbulenz, dem Umfang der Störstofffracht sowie der Schütthöhe optisch erfasst. Hierzu weist die Wandung 19 des Rejektraums 6 ein Schauglas 18 auf, dem eine Lichtquelle 10 und eine Kamera 11 außerhalb des Rejektraums 6 zugeordnet ist.

Zur Auflicht-Beobachtung verläuft die Lichtquelle 10 in Form mehrere LEDs ringförmig um die Kamera 11. Dies sorgt für eine gleichmäßige Ausleuchtung.

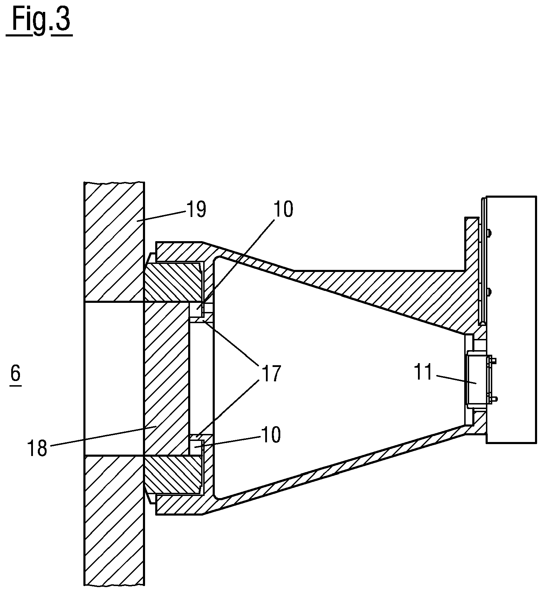

Um dabei eine Beeinträchtigung des Sichtbereichs der Kamera 11 durch die Lichtquelle 10 zu vermeiden, befindet sich zwischen Lichtquelle 10 und Kamera 11 gemäß Figur 3 eine bis zur Wandung 19 des Rejektraums 6, d.h. hier dem Schauglas 18 als Teil der Wand 19 reichende Trennwand 17.

Von dieser Kamera 11 werden die Messdaten an die Steuervorrichtung 14 übermittelt und dort ausgewertet. Dabei wird der Grad der Turbulenz über eine Auswertung der Geschwindigkeit der Partikel im Rejektraum 6, der Umfang der Störstofffracht über eine Auswertung der Dichte der Partikel im Rejektraum 6 und die Schütthöhe im Rejektraum des Schwerteilabscheiders 3 über eine Auswertung des Verhältnisses zwischen der Anzahl an ruhenden und an sich bewegenden Partikeln erfasst.

## Patentansprüche

1. Steuerverfahren einer Vorrichtung zur Reinigung einer Suspension (1), welche zumindest eine Kammer (2) für die Suspension (1) sowie einen damit verbundenen Schwerteil-Abscheider (3) besitzt,
**dadurch gekennzeichnet,**
**dass** im Bereich des Schwerteil-Abscheiders (3) der Grad der Turbulenz und/oder der Umfang der Störstofffracht und/oder die Schütthöhe optisch erfasst und bei der Steuerung der Vorrichtung berücksichtigt wird, wobei
bei der optischen Erfassung die Lageveränderung einzelner Partikel ausgewertet wird.

2. Steuerverfahren nach Anspruch 1,
**dadurch gekennzeichnet,**
**dass** der Grad der Turbulenz über eine Auswertung der Geschwindigkeit einzelner Partikel in der Suspension (1) erfasst wird.

3. Steuerverfahren nach einem der vorhergehenden Ansprüche,
**dadurch gekennzeichnet,**
**dass** der Umfang der Störstofffracht über eine Auswertung der Dichte der Partikel in der Suspension (1) erfasst wird.

4. Steuerverfahren nach einem der vorherigen Ansprüche,
**dadurch gekennzeichnet,**
**dass** die Schütthöhe im Schwerteilabscheider (3) über eine Auswertung des Verhältnisses zwischen der Anzahl an ruhenden und an sich bewegenden Partikeln erfasst wird.

5. Steuerverfahren nach einem der vorherigen Ansprüche,
**dadurch gekennzeichnet,**
**dass** im Bereich des Schwerteil-Abscheiders (3) und/oder einem davor liegenden Abschnitt der Kammer (2) Verdünnungsflüssigkeit (4,5) in die Suspension (1) geleitet wird, deren Menge in Abhängigkeit vom Grad der Turbulenz und/oder dem Umfang der Störfracht gesteuert wird.

6. Steuerverfahren nach einem der vorherigen Ansprüche,
**dadurch gekennzeichnet,**
**dass** der Schwerteil-Abscheiders (3) einen Rejektraum (6) umfasst, der von zwei steuerbaren Schiebern (7,8) begrenzt wird, von denen einer zur Kammer (2) und der andere zu einer Rejektabführung (9) weist, wobei im Normalbetrieb der Schieber (7) zur Kammer (2) offen und der Schieber (8) zur Rejektabführung (9) geschlossen ist und zur Leerung des Rejektraums (6) der Schieber (7) zur Kammer (2) geschlossen und anschließend der Schieber (8) zur Rejektabführung (9) geöffnet wird.

7. Steuerverfahren nach Anspruch 6,
**dadurch gekennzeichnet,**
**dass** die Steuerung der Schieber (7,8) in Abhängigkeit vom Umfang der Störfracht und/oder der Schütthöhe in dem Rejektraum (6) gesteuert wird.

8. Steuerverfahren nach Anspruch 6 oder 7,
**dadurch gekennzeichnet,**
**dass** zur optischen Erfassung auf wenigstens einer Seite des Rejektraumes (6) zumindest eine Lichtquelle (10) und eine Kamera (11) angeordnet sind.

9. Steuerverfahren nach Anspruch 8,
**dadurch gekennzeichnet,**
**dass** die Wand (19) des Rejektraums (6) abschnittswese lichtdurchlässig ist und die Lichtquelle (10) und/oder die Kamera (11) außerhalb des Rejektraums (6) angeordnet sind.

10. Steuerverfahren nach Anspruch 9,
**dadurch gekennzeichnet,**
**dass** die Lichtquelle (10) und die Kamera (11) außerhalb des Rejektraums (6) gegenüber dem lichtdurchlässigen Abschnitt der Wand (19) des Rejektraums (6) angeordnet sind und sich zwischen Lichtquelle (10) und Kamera (11) eine bis zur Wand (19) des Rejektraums (6) reichende Trennwand (17) befindet.

11. Steuerverfahren nach einem der vorhergehenden Ansprüche,
**dadurch gekennzeichnet, dass**
die Vorrichtung als Hydrozyklon ausgebildet ist.

12. Steuerverfahren nach Anspruch 11,
**dadurch gekennzeichnet, dass**
der Hydrozyklon eine Kammer (2) kreisförmigen Querschnitts aufweist, in die an einem Ende ein Einlauf (12) sowie ein Leichtteil-Auslauf (13) und am gegenüberliegenden Ende ein Schwerteil-Abscheider (3) mündet.

13. Steuerverfahren nach einem der Ansprüche 1 bis 10,
**dadurch gekennzeichnet, dass**
die Vorrichtung als Sedimentationstank mit einem Einlauf (12) und einem Schwerteil-Abscheider (3) ausgebildet ist.

14. Steuerverfahren nach einem der vorhergehenden Ansprüche,
**dadurch gekennzeichnet, dass**
die zur Herstellung einer Papier-, Karton-, Tissue- oder einer anderen Faserstoffbahn dienende Faserstoff-Suspension (1) am Einlauf (12) vorzugsweise eine Stoffdichte zwischen 0,5 und 6%, insbesondere zwischen 1,5 und 3,5 % hat.

## Claims

1. Control method of a device for cleaning a suspension (1), said device having at least one chamber (2) for the suspension (1) and a heavy fraction separator (3) that is connected thereto,
**characterized in**
**that** the degree of turbulence and/or the extent of the contaminant load and/or the bulk height is optically detected in the area of the heavy fraction separator (3) and is taken this into account during the control of the device, wherein
the change in position of individual particles is evaluated during the optical detection.

2. Control method according to Claim 1,
**characterized in**
**that** the degree of turbulence is detected by evaluating the velocity of individual particles in the suspension (1).

3. Control method according to one of the preceding claims,
**characterized in**
**that** the extent of the contaminant load is detected by evaluating the concentration of the particles in the suspension (1).

4. Control method according to one of the preceding claims,
**characterized in**
**that** the bulk height in the heavy fraction separator (3) is detected by evaluating the ratio between the number of stationary and moving particles.

5. Control method according to one of the preceding claims,
**characterized in**
**that** dilution fluid (4,5) is fed into the suspension (1) in the area of the heavy fraction separator (3) and/or a section of the chamber (2) that lies upstream thereof and the amount of dilution fluid is controlled in dependence upon the degree of turbulence and/or the extent of the contaminant load.

6. Control method according to one of the preceding claims,
**characterized in**
**that** the heavy fraction separator (3) comprises a reject chamber (6) which is delimited by two controllable slide valves (7,8), of which one faces the chamber (2) and the other faces a reject discharge (9), wherein during the normal operation the slide valve (7) to chamber (2) is open and the slide valve (8) to reject discharge (9) is closed and so as to empty the reject chamber (6) the slide valve (7) to chamber (2) is closed and subsequently the slide valve (8) to the reject discharge (9) is opened.

7. Control method according to Claim 6,
**characterized in**
**that** the control of the slide valves (7, 8) is controlled in dependence upon the extent of the contaminant load and/or the bulk height in the reject chamber (6).

8. Control method according to Claim 6 or 7,
**characterized in**
**that** for the optical detection, at least one light source (10) and one camera (11) are arranged on at least one side of the reject chamber (6).

9. Control method according to Claim 8,
**characterized in**
**that** that the wall (19) of the reject chamber (6) is light-permeable in sections and the light source (10) and/or the camera (11) are arranged outside the reject chamber (6).

10. Control method according to Claim 9,
**characterized in**
**that** the light source (10) and the camera (11) are arranged outside the reject chamber (6) opposite the light-permeable section of the wall (19) of the reject chamber (6), and a partition (17) that extends as far as the wall (19) of the reject chamber (6) is provided between the light source (10) and the camera (11).

11. Control method according to one of the preceding claims,
**characterized in that**
the device is designed as a hydrocyclone.

12. Control method according to Claim 11,
**characterized in that**
the hydrocyclone comprises a chamber (2) having a circular cross-section into which an inlet (12) and a light fraction outlet (13) issue at one end and a heavy fraction separator (3) issues at the opposite end.

13. Control method according to one of Claims 1 to 10,
**characterized in that**
the device is designed as a sedimentation tank having an inlet (12) and a heavy fraction separator (3).

14. Control method according to one of the preceding claims,
**characterized in that**
the fibrous suspension (1) that is used for the production of a paper, board, tissue or another fibrous web preferably has a stock concentration of between 0.5 and 6%, in particular between 1.5 and 3.5%, at the inlet (12) .

## Revendications

1. Procédé de commande d'un dispositif permettant d'épurer une suspension (1), qui dispose d'au moins une chambre (2) pour la suspension (1) ainsi que d'un séparateur de fraction lourde (3) relié à celle-ci,
**caractérisé en ce qu'**au niveau du séparateur de fraction lourde (3), le degré de la turbulence et/ou le volume de la charge d'impuretés et/ou la hauteur de déversement sont détectés optiquement et pris en compte lors de la commande du dispositif, dans lequel la variation de position de particules individuelles est prise en compte lors de la commande du dispositif.

2. Procédé de commande selon la revendication 1, **caractérisé en ce que** le degré de la turbulence est détecté par une évaluation de la vitesse de particules individuelles dans la suspension (1).

3. Procédé de commande selon l'une quelconque des revendications précédentes, **caractérisé en ce que** le volume de la charge d'impuretés est détecté par une évaluation de la densité des particules dans la suspension (1).

4. Procédé de commande selon l'une quelconque des revendications précédentes, **caractérisé en ce que** la hauteur de déversement dans le séparateur de fraction lourde (3) est détectée par une évaluation du rapport entre le nombre de particules statiques et de particules mobiles.

5. Procédé de commande selon l'une quelconque des revendications précédentes, **caractérisé en ce qu'**au niveau du séparateur de fraction lourde (3) et/ou d'une partie de la chambre (2) située en amont celui-ci, un liquide de dilution (4, 5) est dirigé dans la suspension (1), dont la quantité est commandée en fonction du degré de la turbulence et/ou du volume de la charge d'impuretés.

6. Procédé de commande selon l'une quelconque des revendications précédentes, **caractérisé en ce que** le séparateur de fraction lourde (3) comprend une chambre de rejet (6) qui est délimitée par deux vannes (7, 8) pouvant être commandées, dont l'une est orientée vers la chambre (2) et l'autre est orientée vers une évacuation de rejet (9), dans lequel, en cours de fonctionnement normal, la vanne (7) orientée vers la chambre (2) est ouverte, et la vanne (8) orientée vers l'évacuation de rejet (9) est fermée, et pour vider la chambre de rejet (6), la vanne (7) orientée vers la chambre (2) est fermée, et ensuite la vanne (8) orientée vers l'évacuation de rejet (9) est ouverte.

7. Procédé de commande selon la revendication 6, **caractérisé en ce que** la commande des vannes (7, 8) est réalisée en fonction du volume de la charge d'impuretés et/ou de la hauteur de déversement dans la chambre de rejet (6).

8. Procédé de commande selon la revendication 6 ou 7, **caractérisé en ce que** sur au moins un côté de la chambre de rejet (6), au moins une source de lumière (10) et une caméra (11) sont disposées pour la détection optique.

9. Procédé de commande selon la revendication 8, **caractérisé en ce que** la paroi (19) de la chambre de rejet (6) est opaque par endroits, et la source de lumière (10) et/ou la caméra (11) est/sont disposée(s) à l'extérieur de la chambre de rejet (6).

10. Procédé de commande selon la revendication 9, **caractérisé en ce que** la source de lumière (10) et la caméra (11) sont disposées à l'extérieur de la chambre de rejet (6) à l'opposé de la partie transparente de la paroi (19) de la chambre de rejet (6), et une cloison (17) allant jusqu'à la paroi (19) de la chambre de rejet (6) se trouve entre la source de lumière (10) et la caméra (11).

11. Procédé de commande selon l'une quelconque des revendications précédentes, **caractérisé en ce que** le dispositif est réalisé sous forme d'hydrocyclone.

12. Procédé de commande selon la revendication 11, **caractérisé en ce que** l'hydrocyclone présente une chambre (2) à section transversale circulaire sur laquelle débouche à une extrémité une arrivée (12) ainsi qu'une sortie de fraction légère (13) et à l'extrémité opposée un séparateur de fraction lourde (3) .

13. Procédé de commande selon l'une quelconque des revendications 1 à 10, **caractérisé en ce que** le dispositif est réalisé comme un réservoir de sédimentation pourvu d'une arrivée (12) et d'un séparateur de fraction lourde (3).

14. Procédé de commande selon l'une quelconque des revendications précédentes, **caractérisé en ce que** la suspension de matière fibreuse (1) servant à la production d'une nappe de papier, de carton, de papier de soie ou d'une autre matière fibreuse, présente à l'arrivée (12) de préférence une consistance entre 0,5 et 6 %, en particulier entre 1,5 et 3,5 %.
